# EUROPÄISCHE PATENTANMELDUNG

(11) **EP 4 556 390 A1**
(43) Veröffentlichungstag der Anmeldung: **21.05.2025**
(21) Anmeldenummer: 24213106.8
(22) Anmeldetag: 14.11.2024
(51) Int. Cl.: B65D 19/24

(54) **MEHRWEGTRANSPORTVORRICHTUNG**

(30) Priorität: 15.11.2023 DE 102023131884
(71) Anmelder: PURUS PLASTICS GmbH, 95659 Arzberg (DE)
(72) Erfinder: Metzler, Richard Johann, 82041 Oberrhaching (DE); Lenz, Thorsten, 14055 Berlin (DE)
(74) Vertreter: Sperschneider, Alexandra

(57) **Zusammenfassung**

Mehrwegtransportvorrichtung (1) aus Kunststoff zum Transportieren von Gütern, aufweisend ein flächig ausgebildetes Trägerelement (3) sowie mehrere angeformte Standfüße (8a, 8b, 8c), welche als zur Güterträgeroberseite (2) hin offene Hohlkörper ausgebildet sind, wobei innerhalb von wenigstens zwei Standfüßen jeweils wenigstens ein Drehstapelelement (14, 16, 18) angeordnet ist.

## Beschreibung

Die vorliegende Erfindung betrifft eine flächig ausgebildete Mehrwegtransportvorrichtung gemäß Patentanspruch 1.

### Hintergrund

Aus der Praxis bekannte Mehrwegtransportträger aus Kunststoff weisen den Nachteil auf, dass sie im leeren Zustand, also ohne darauf angeordnete Güter, nur raumverschwendend transportierbar sind. Zugleich sind auch effektiv stapelbare Mehrwegtransportträger bekannt, welche im leeren Zustand platzsparend, ineinander anordenbar sind. Allerdings erweist sich dies als nachteilig, wenn die Mehrwegtransportträger wieder mit Gütern neu bestückt werden sollen. In der sog. Nesting-Anordnung ist es beispielsweise für Gabelstapler oder auch andere Hubwagen nicht möglich, übereinander angeordnete Mehrwegtransportträger einzeln zu entnehmen. Die Gabeln finden keinen Zwischenraum zwischen zwei übereinander angeordneten Mehrwegtransportträgern.

### Aufgabe

Daher ist es Aufgabe der vorliegenden Erfindung eine Mehrwegtransportvorrichtung bereitzustellen, welche besonders effektiv und platzsparend nestbar ist. Weiterhin ist Aufgabe der vorliegenden Erfindung, dass sie zugleich in einer besonders einfachen Art und Weise stapelbar ist, sodass auch Gabelstapler, Hubwagen oder andere Transporthilfsmittel oder andere Fördermittel besonders einfach die einzelnen Mehrwegtransportvorrichtungen entnehmen können.

### Lösung

Die Aufgabe wird durch die in Patentanspruch 1 angegebenen technischen Merkmale gelöst.

Der Kern der vorliegenden Erfindung liegt darin, eine Mehrwegtransportvorrichtung aus Kunststoff zum Transportieren von Gütern bereitzustellen, welche wenigstens ein flächig ausgebildetes Trägerelement, welches eine Güterträgeroberseite und eine hiervon abgewandte Trägerunterseite aufweist, wobei Güterträgeroberseite und Trägerunterseite über wenigstens einen umlaufenden Rand miteinander verbunden sind, aufweist.

Weiterhin weist die erfindungsgemäße Mehrwegtransportvorrichtung aus Kunststoff mehrere, an der Trägerunterseite und/oder Güterträgeroberseite und/oder dem Trägerelement angeformte Standfüße auf, welche als zur Güterträgeroberseite hin offene Hohlkörper ausgebildet sind, und deren Grundfläche zumindest teilweise geschlossen ausgebildet ist. Diese Standfüße sind vorteilhaft, da hierdurch eine Beabstandung des flächig ausgebildeten Trägerelements gegenüber dem Boden geschaffen werden kann. Vorteilhaft können hierdurch auch Positionsänderungen der Mehrwegtransportvorrichtung durchgeführt werden, beispielsweise in dem ein Gabelstapler zwischen Standfüßen und Trägerunterseite einfährt und die Mehrwegtransportvorrichtung anhebt.

Darüber hinaus ist die Hohlkörperausgestaltung der Standfüße dahingehend von Vorteil, da die von der Güterträgeroberseite her zugänglich und offen sind. So kann beispielsweise eine weitere, obere Mehrwegtransportvorrichtung oberhalb der leeren Güterträgeroberseite angeordnet werden. Die Standfüße der oberen Mehrwegtransportvorrichtung können dann zumindest teilweise in das freie Innenvolumen der unteren Hohlkörperstandfüße eingeführt werden. Bereits hiermit ist eine erste Platzeinsparung und somit ebenfalls eine Volumenreduzierung erreicht. Insbesondere bei Mehrwegtransportvorrichtungen aus Holz, welche massive Holzfüße und Holzkufen aufweisen, ist eine derartige Ineinanderführung der einzelnen Mehrwegtransportvorrichtungen gerade nicht möglich. Die Holztransportvorrichtungen werden platzeinnehmend aufeinander gestapelt, so dass viel ungenutzter Leerraum entsteht.

Vorteilhaft weist die hier beschriebene Mehrwegtransportvorrichtungen wenigstens vier oder mehr Standfüße auf.

Um nun eine multifunktionale Mehrwegtransportvorrichtungen bereitstellen zu können, weist diese erfindungsgemäß innerhalb von wenigstens zwei Standfüßen jeweils wenigstens ein Drehstapelelement auf. Durch das Vorsehen von wenigstens einem Drehstapelelement im freien Innenvolumen der als Hohlkörper ausgebildeten Standfüße ist es erstmals möglich, zwei gewünschte Funktionalitäten, nämlich die Stapelbarkeit und die Nestbarkeit in einer Vorrichtung zu vereinen.

Durch die Vereinigung dieser beiden Eigenschaften wird eine multifunktionale Mehrwegtransportvorrichtung bereitgestellt, welche besonders einfach und hoch flexibel an die unterschiedlichsten Lager- und Transportbedürfnisse angepasst ist.

Weitere vorteilhafte Ausführungsformen ergeben sich aus den Unteransprüchen.

Bei einer weiteren vorteilhaften Ausführungsform ist das wenigstens eine Drehstapelelement mit der zumindest teilweise geschlossenen Grundfläche des Standfußes verbunden. Vorteilhaft sind die Standfüße derart ausgebildet, dass sie sich nach unten hin, also von der Trägerunterseite weg, verjüngen. Die Standfüße sind weiterhin nicht vollständig geöffnet, sondern zumindest teilweise mit einer Grundfläche verschlossen. Diese Grundfläche bringt die notwendige Stabilität mit. Zudem wird sie für die Anordnung des wenigstens einen Drehstapelelements im Inneren des jeweiligen Standfußes benötigt.

Durch das Vorsehen wenigstens eines Drehstapelelements an der Grundfläche des Standfußes wird möglichst viel freies Innenvolumen der Standfußes bereitgestellt, in welches ein Standfuß einer weiteren Mehrwegträgervorrichtung größtenteils eingeführt werden kann. Das freie Innenvolumen des Hohlkörpers wird somit bestmöglich genutzt.

Bei einer weiteren vorteilhaften Ausführungsform weisen die wenigstens zwei Drehstapelelemente zueinander verschiedene geometrische Ausgestaltungen auf. Dies hat sich dahingehend als vorteilhaft erwiesen, da durch die zueinander verschiedenen geometrischen Ausgestaltungen die beiden Funktionen Stapelbarkeit und Nestbarkeit in einer einzigen Mehrwegträgervorrichtung bereitgestellt werden können. Als besonders vorteilhaft hat es sich erwiesen, wenn die hier beschriebene Mehrwegträgervorrichtung wenigstens zwei unterschiedliche Drehstapelelemente in den Standfüßen aufweist. Durch das Vorsehen von diesen unterschiedlichen Geometrien der Drehstapelelemente ist es möglich, sowohl die Stapelbarkeit als auch die Nestbarkeit der Mehrwegträgervorrichtung bereitstellen zu können.

Unter "Nestbarkeit" ist vorteilhaft die Eigenschaft zu verstehen, dass die hier beschriebenen Mehrwegträgervorrichtungen im ungebrauchten, leeren Zustand, wenn also keine Güter darauf angeordnet sind, ineinandergesteckt werden können, so das während des ungebrauchten Zustands möglichst wenig ungenutztes Volumen verschenkt wird. Weiterhin sind die Formulierungen "Mehrwegträgervorrichtung" und "Mehrwegtransportvorrichtung" synonym zu verstehen und miteinander austauschbar.

Als ungebrauchter Zustand ist beispielsweise der Zustand beim Leertransport, Rücktransport oder auch einfach der Lagerzustand zu verstehen. Bei Leer- und/oder Rücktransport sind die transportierten Güter abgeladen und die Mehrwegtransportvorrichtungen werden nicht erneut mit Gütern bestückt. Sie bleiben "leer". Da sie aber an anderen Orten benötigt werden, werden die ungebrauchten, dann genesteten Mehrwegtransportvorrichtungen häufig beispielsweise via LKW weitertransportiert. Somit kann das Ladevolumen des LKW hervorragend ausgenutzt werden und eine effektive Anordnung genesteter Mehrwegtransportvorrichtungen bereitgestellt werden.

Gleiches gilt auch für den Lagerzustand, wenn also ungebrauchte, leere Mehrwegtransportvorrichtungen nicht bestückt werden sollen, können diese über die Nestbarkeit besonders platz- und volumensparend bis zur nächsten Verwendung gelagert werden.

Bei einer weiteren vorteilhaften Ausführungsform ist ein erstes Drehstapelelement als aus einem Stabilisierungselement zumindest teilweise hervorstehender Block ausgebildet.

Für eine dauerhafte und verlässliche Benutzung der Mehrwegträgervorrichtung hat es sich als vorteilhaft erwiesen, wenn im Innenvolumen des Standfußes, in dessen unterem Bereich und mit der Grundfläche fest verbunden, wenigstens ein Stabilisierungselement vorgesehen ist. Das wenigstens eine Stabilisierungselement ist dahingehend von Vorteil, da hierdurch das wenigstens eine Drehstapelelement zusätzlich stabilisiert wird. Somit kann bei unsachgemäßer Krafteinwirkung ein Brechen oder allgemein eine Beschädigung des Drehstapelelements vermieden werden. Diese Funktion des Stabilisierungselement greift für alle Drehstapelelemente, unabhängig von ihrer eigentlichen geometrischen Ausbildung.

Selbstverständlich ist dies nicht begrenzend zu verstehen, sodass es auch denkbar ist, dass mehrere Stabilisierungselemente vorgesehen sind. In einer einfachen Ausführungsform kann das Stabilisierungselement beispielsweise als Wandung zur Kraftabführung ausgebildet sein. Das jeweilige Drehstapelelement ist vorteilhaft Teil der Wandung und mit dieser einteilig ausgebildet, beispielsweise aus Kunststoff gespritzt. Es hat sich als vorteilhaft erwiesen, wenn die Wandung selbst dünner ausgebildet ist, als das jeweilige Drehstapelelement. Das Stabilisierungselement hat weiterhin die vorteilhafte Aufgabe, sowohl bei der Stapelanordnung als auch bei der Nestanordnung, die von oben einwirkende Kraftbeaufschlagung aufzunehmen und mit abzuführen. Insbesondere resultiert die von oben auf das Stabilisierungselement einwirkende Kraftbeaufschlagung durch das Einführen eines weiteren Standfußes einer zweiten Mehrwegtransportvorrichtung. Mit der Grundflächenaußenseite dieses weiteren Standfußes wird eine gemeinsame Kontaktfläche mit dem Stabilisierungselement, vorteilhaft dessen Oberseite, ausgebildet. Der in den ersten Standfuß eingeführte weitere Standfuß einer weiteren Mehrwegtransportvorrichtungen liegt somit auf dem Stabilisierungselement mit auf.

Um nun auch die entsprechenden Drehstapelbarkeit der Mehrwegtransportvorrichtung bereitstellen zu können, ist zunächst ein erstes Drehstapelelement in Blockform ausgebildet. Diese Blockform ist vorteilhaft in das Stabilisierungselement integriert und zudem aus diesem hervorstehend ausgebildet. Dies bedeutet vorteilhaft, dass bei einer vertikalen Erstreckung des Stabilisierungselements von der inneren Grundfläche des Standfußes aus nach oben, auch das erste Drehstapelelement eine vorteilhafte vertikale Erstreckung nach oben in das freie Innenvolumen des Standfußes, ausgehend von der inneren Grundfläche des Standfußes, aufweist. Vorteilhaft ist das Drehstapelelement in seiner vertikalen Erstreckung länger ausgebildet als das Stabilisierungselement. Es ist somit aus diesem hervorstehend mit einem Überstand angeordnet. Dies ist vorteilhaft, da hierdurch nochmals eine zusätzliche Auflagefläche und ein zusätzlicher Fixierungsbereich für die Nestbarkeit und die Stapelbarkeit geschaffen wird.

In der hier beschriebenen zunächst einfachsten geometrischen Ausgestaltung, ist das erste Drehstapelelement als rechteckiger Block ausgebildet. Dies ist selbstverständlich nicht zu begrenzend und zu verstehen, sodass es auch denkbar ist, dass beispielsweise eine zylindrische Struktur vorgesehen ist. Darüber hinaus kann auch jegliche andere polygonale Struktur, wie beispielsweise Dreieck, Fünfeck, Sechseck oder dergleichen als Geometrie des ersten Drehstapelelements ausgebildet sein. Auch können beispielsweise mehrere zylindrische Grundformen ondulierend aneinander angeordnet sein und sich zugleich vertikal nach oben erstrecken.

Bei einer weiteren vorteilhaften Ausführungsform weist ein zweites Drehstapelelement wenigstens zwei Vorsprünge auf. Auch das zweite Drehstapelelement, welches sich in seiner Geometrie von dem ersten Drehstapelelement unterscheidet, ist vorteilhaft einteilig mit dem Stabilisierungselement ausgebildet. Zugleich ist es ebenfalls an der Grundfläche des Standfußes in dessen Innenvolumen fest angeordnet. Als weitere Geometrie des zweiten Drehstapelelements haben sich zwei Vorsprünge als vorteilhaft erwiesen. Vorteilhaft sind diese beiden Vorsprünge zueinander beabstandet angeordnet. Weiterhin vorteilhaft sind beide Vorsprünge in ihrer vertikalen Erstreckung, ausgehend von der Grundfläche des Standfußes aus nach oben, gleich hoch. Somit sind zwei unterschiedliche Drehstapelelemente offenbart, welche in vorbestimmbarer Anordnung im Innenvolumen der als Hohlkörper ausgebildeten Standfüße der Mehrwegtransportvorrichtungen fest angeordnet sind. Besonders vorteilhaft weist jeder Standfuß ein Drehstapelelement einer Geometrie auf.

Als besonders vorteilhaft hat es sich erwiesen, wenn die beiden Vorsprünge als zylindrische geschlossene Körper ausgebildet sind. Die nach oben gerichteten Deckflächen der beiden zylindrischen Vorsprungskörper bilden nochmals zusätzliche Auflageflächen aus. Diese werden dann benötigt, wenn eine weitere Mehrwegtransportvorrichtung genestet werden soll. Die nach oben gerichteten Deckflächen bilden dann mit der Grundflächenaußenseite eines weiteren Standfußes einer weiteren Mehrwegtransportvorrichtung im Nestingzustand gemeinsame Kontaktflächen aus. Hierdurch kann von oben einwirkende Kraft, beispielsweise verursacht durch das Einstecken der weiteren Mehrwegtransportvorrichtung in das freie Innenvolumen des ersten Standfußes, aufgenommen und abgeführt werden.

Für eine besonders stabile und bruchfeste Ausgestaltung des zweiten Drehstapelelements sind die zylindrisch ausgebildeten beiden Vorsprünge vorteilhaft als Vollmaterialkörper ausgebildet. Weiterhin vorteilhaft sind die beiden Vorsprünge entlang des Stabilisierungselements voneinander beabstandet.

Vorteilhaft ist auch denkbar, dass die Drehstapelelemente, egal welcher Geometrie, eine profilierte Oberfläche aufweisen. Besonders vorteilhaft ist der Bereich profiliert ausgebildet, welcher aus dem Stabilisierungselement hervorsteht. Dies bringt eine zusätzliche Bruchsicherheit, da durch die Oberflächenprofilierung die Kraftableitung verbessert werden kann. Somit wird insgesamt die Riss- und Bruchsicherheit während der Anordnung des Stapelns und/oder des Nestings verbessert. Ein mögliches Ausführungsbeispiel ist beispielsweise, dass die Oberfläche in Rillenform oder Rippenform und/oder Wellenform ausgebildet ist. So ist denkbar, dass die Oberfläche der Drehstapelelemente wenigstens eine oder auch mehrere Rillen und/oder Rippen aufweist. Vorteilhaft erstrecken sich diese in vertikaler Richtung, in welcher auch die Krafteinleitung beim Stapeln und Nesting erfolgt. Hierdurch wird nochmals zusätzlich Stabilität der Drehstapelelemente bereitgestellt.

Bei einer weiteren vorteilhaften Ausführungsform verbindet das Stabilisierungselement zwei einander gegenüberliegende Innenwandungen des Standfußes miteinander. Dies ist vorteilhaft, da hierdurch nochmals zusätzliche Stabilität bereitgestellt werden kann. Die Verbindung der beiden einander gegenüberliegenden inneren Wandungen des Standfußes schafft eine durchgängige Auflagefläche. Besonders vorteilhaft ist das Stabilisierungselement daher als Kunststoffrippe ausgebildet. Diese ist zudem vorteilhaft, da hierdurch eine ausreichend hohe Steifigkeit und Stabilisierung des Standfußes erreicht werden kann, ohne dass es zu Masseanhäufungen an der Grundfläche des Standfußes kommt.

Bei einer weiteren vorteilhaften Ausführungsform sind an einer Grundflächenaußenseite der Standfüße Drehstapelvertiefungen und/oder Öffnungen ausgebildet. Um nun die Drehstapelbarkeit der Mehrwegtransportvorrichtungen zu vereinfachen, sind an der Grundflächenaußenseite der Standfüße Drehstapelvertiefungen und/oder Öffnungen ausgebildet.

Die Öffnungen sind vorteilhaft durchgängig ausgebildet und dienen dem Wasserdurchlass. Werden beispielsweise nasse Mehrwegtransportvorrichtungen übereinander gestapelt, also die Standfüße zumindest teilweise ineinander geführt, so wird aufgrund der konischen Ausgestaltungen der Standfüße das Oberflächenwasser in Richtung Standfußgrundfläche laufen. Die Grundfläche weist daher vorteilhaft durchgängige Öffnungen auf, sodass sich das Wasser gerade nicht sammelt, sondern abfließen kann. Dies ist allerdings nicht begrenzend zu verstehen, so dass es auch denkbar ist, dass keine Öffnungen in der Grundfläche vorgesehen sind.

Darüber hinaus weist die Grundfläche ergänzend oder alternativ zu den Öffnungen an ihrer Außenseite wenigstens eine Drehstapelvertiefung auf. Die Drehstapelvertiefung kann geschlossen oder aber auch nur teilweise geschlossen ausgebildet sein. Bei der Ausführungsform, dass die Drehstapelvertiefung nur teilweise geschlossen ausgebildet ist, kann auf die zusätzlichen Öffnungen in der Standfußgrundfläche verzichtet werden. Mögliches, überschüssiges Wasser kann dann durch die in der wenigstens einen Drehstapelvertiefung vorgesehenen wenigstens einen Öffnung austreten. Bei der geschlossenen Ausführungsform hat es sich als vorteilhaft erwiesen, wenn zusätzlich Öffnungen zum Wasserablauf in der Standfußgrundfläche vorgesehen sind.

Bei einer weiteren vorteilhaften Ausführungsform sind die Drehstapelvertiefungen komplementär zu den Drehstapelelementen ausgebildet. Dies ist beispielsweise von Vorteil, wenn mehrere Mehrwegtransportvorrichtungen genestet werden sollen. Sollen beispielsweise zwei leere Mehrwegtransportvorrichtungen genestet werden, so wird zunächst die zweite Mehrwegtransportvorrichtung oberhalb von der ersten Mehrwegtransportvorrichtung in "Nestposition" positioniert. Unter "Nestposition" ist vorteilhaft die Position zu verstehen, in welcher die Drehstapelelemente der ersten Mehrwegtransportvorrichtung und der zweiten Mehrwegtransportvorrichtung deckungsgleich, aber voneinander beabstandet angeordnet sind. Hierunter ist vereinfacht zu verstehen, dass sich die ersten Drehstapelelemente der unteren Mehrwegtransportvorrichtung unterhalb und in Flucht zu den ersten Drehstapelelementen der oberen Mehrwegtransportvorrichtung befinden. Auch die beiden Mehrwegtransportvorrichtungen, welche übereinander positioniert sind, befinden sich zueinander in Flucht angeordnet.

Wird nur die obere Mehrwegtransportvorrichtung nach unten gegen die unteren Mehrwegtransportvorrichtung geführt, so werden die Standfüße der oberen Mehrwegtransportvorrichtung in das freie Innenvolumen der Standfüße der unteren Mehrwegtransportvorrichtung eingeführt. Dieses Einführen erfolgt solange, bis die Grundflächenaußenseite der oberen Standfüße gemeinsame Kontaktflächen mit dem wenigstens einen Stabilisierungselement und/oder dem wenigstens einen angeordneten Drehstapelelement ausbilden. Besonders vorteilhaft sind die Grundflächenaußenseite der oberen Drehstapelvertiefungen in der Form komplementär zu den Drehstapelelementen ausgebildet, so dass diese zumindest teilweise in die Drehstapelvertiefungen einführbar sind.

Zur Verbesserung der Stabilisierung ist es von Vorteil, wenn die im Innenvolumen der unteren Standfüße nach oben hervorstehenden Drehstapelelemente zumindest einen Formschluss mit den Drehstapelvertiefungen der Grundflächenaußenseite der oberen Standfüße ausbilden. Hierdurch kann ein unerwünschtes Abrutschen und ein sicheres Halten der Mehrwegtransportvorrichtungen aneinander im genesteten Zustand bereitgestellt werden.

Besonders vorteilhaft sieht der genestete Zustand zweier oder auch mehrerer Mehrwegtransportvorrichtungen übereinander vor, dass die Trägerelemente und/oder die Trägerunterseite ebenfalls zumindest teilweise gemeinsame Kontaktflächen ausbilden. Besonders vorteilhaft bildet die Trägerunterseite der oberen Mehrwegtransportvorrichtungen mit der Güterträgeroberseite der unteren Mehrwegtransportvorrichtungen wenigstens eine gemeinsame Kontaktfläche aus. Hierdurch kann eine besonders effektive Übereinanderpositionierung mehrerer Mehrwegtransportvorrichtungen übereinander geschaffen werden, sodass kein unnötiges Raumvolumen verschwendet wird. Im einfachsten Fall erfolgt die Übereinanderpositionierung als Turm.

Ist hingegen die Stapelbarkeit der Mehrwegtransportvorrichtungen gefragt, so erfolgt die Positionierung vorteilhaft um 180° versetzt. Ausgehend von einer ersten, unteren Mehrwegtransportvorrichtung wird eine zweite, weitere Mehrwegtransportvorrichtung oberhalb der Ersten positioniert. Die beiden Mehrwegtransportvorrichtungen sind allerdings nicht deckungsgleich übereinander positioniert, wie bei der Nestbarkeit, sondern die obere Mehrwegtransportvorrichtung ist um eine vertikale Rotationsachse, vorteilhaft ausgehend von dem Mittelpunkt des Trägerelements um 180° rotiert. Dies bedeutet, dass die ersten Drehstapelelemente der oberen Mehrwegtransportvorrichtung oberhalb der zweiten Drehstapelelemente der unteren Mehrwegtransportvorrichtung positioniert sind. Die beiden Mehrwegtransportvorrichtungen selbst sind zueinander in der Flucht angeordnet. Wird nun die obere Mehrwegtransportvorrichtung gegen die Untere geführt, so werden zugleich auch die Standfüße ineinander geführt. Aufgrund der aber nunmehr versetzten 180° Positionierung der Drehstapelelemente können die Mehrwegtransportvorrichtungen nicht mehr genestet, sondern nur noch gestapelt werden. Es ist kein Formschluss mehr zwischen den Drehstapelvertiefungen der oberen Mehrwegtransportvorrichtung und den dazu passenden Drehstapelelementen der unteren Mehrwegtransportvorrichtung möglich. Dies bedeutet, dass sich ein Zwischenraum zwischen zwei gestapelten Mehrwegtransportvorrichtungen ergibt. Besonders vorteilhaft ist dieser Zwischenraum ausreichend groß, dass sich Gabeln eines Gabelstaplers oder auch Teile anderer Transporthilfsmittel einführen lassen. Im Beispiel eines Gabelstaplers kann dieser dann besonders leicht die einzelnen Mehrwegtransportvorrichtungen anheben und voneinander trennen. Ermöglicht wird dies dadurch, dass die Drehstapelvertiefungen und die Drehstapelelement nicht mehr komplementär zueinander angeordnet sind, sondern durch die 180° Rotation nunmehr genau entgegengesetzt. Dies bedeutet beispielsweise, dass eine Drehstapelvertiefung für ein erstes Drehstapelelement jetzt oberhalb eines zweiten Drehstapelelements angeordnet ist. Somit kann kein Formschluss mehr ausgebildet werden. Es wird eine Beabstandung zwischen den beiden Mehrwegtransportvorrichtungen bedingt. Diese Beabstandung ist für den Gabelstapler hingegen ausreichend.

Besonders vorteilhaft weist der Standfuß mit innenliegendem ersten Drehstapelelement an seiner Außenseite der Grundfläche auch die Drehstapelvertiefungen für ein erstes Drehstapelelement auf. Besonders vorteilhaft weist der Standfuß mit innenliegendem zweiten Drehstapelelement an seiner Außenseite der Grundfläche auch die Drehstapelvertiefungen für ein zweites Drehstapelelement auf. Besonders vorteilhaft weist der Standfuß mit innenliegendem dritten Drehstapelelement an seiner Außenseite der Grundfläche auch die Drehstapelvertiefungen für ein drittes Drehstapelelement auf, etc. Durch die Rotation um vorteilhaft 180° bei einer rechteckigen Ausgestaltung der Mehrwegtransportvorrichtungen bilden sich nunmehr ein Versatz zwischen Drehstapelvertiefungen und Drehstapelelementen. Ein platz- und volumensparendes Ineinandereinführen ist nicht mehr möglich. Es wird hingegen eine Beabstandung bedingt.

Bei einer weiteren vorteilhaften Ausführungsform hat es sich als vorteilhaft erwiesen, wenn der umlaufenden Rand des Trägerelements wenigstens ein Markierungsmittel aufweist. Dieses Markierungsmittel kann beispielsweise mechanisch ausgebildet sein, wie vorteilhaft eine Einkerbung. Eine andere Möglichkeit wäre auch, dass Markierungsmittel farbig abgesetzt auszubilden. Für den Gabelstaplerfahrer sind die Markierungsmittel dahingehend von Vorteil, dass er weiß, ob die Mehrwegtransportvorrichtungen genestet oder gestapelt angeordnet sind. Als besonders vorteilhaft hatte sich erwiesen, wenn im genesteten Zustand alle Markierungsmittel in Flucht zueinander angeordnet sind. Im Stapelzustand Können hingegen die Markierungsmittel versetzt zueinander sein. Somit ist ein optisches Erkennungsmittel geschaffen, dass schnell und einfach erkannt werden kann, wie die vorliegenden Mehrwegtransportvorrichtungen positioniert sind.

Bei einer weiteren vorteilhaften Ausführungsform ist auch denkbar, dass die Mehrwegtransportvorrichtungen mit einem Kennzeichenmittel versehen sind. Dies kann beispielsweise ein Regenerationsfach ID Chip oder ein anderes elektrisch aus lesbares Kennzeichenmittel sein. So wäre darüber hinaus auch beispielsweise ein Strichcode denkbar. Mit diesem Kennzeichenmittel können einfach die Mehrwegtransportvorrichtungen dem jeweiligen Eigentümer zugewiesen und sortiert werden.

In einer weiteren vorteilhaften Ausführungsform ist die Mehrwegtransportvorrichtung flächig ausgebildet. Sie weist hierzu das flächig ausgebildete Trägerelement auf, an dessen Unterseite nach unten gerichtete Standfüße vorgesehen. Unter "flächig ausgebildet" ist vorteilhaft zu verstehen, dass es sich um eine Mehrwegtransportvorrichtung handelt, welche in ihrer Länge und Breite variabel ausgebildet ist, beispielsweise als Rechteck. Allerdings fehlt es der flächig ausgebildeten Mehrwegtransportvorrichtung an sich nach oben erstreckenden Wandungen, wie sie beispielsweise bei Kästen oder Boxen vorgesehen sind.

Besonders vorteilhaft ist die Mehrwegtransportvorrichtung als Kunststoffpalette ausgebildet und kann auch als diese bezeichnet werden. Dies hat sich als nachhaltig und vorteilhaft erwiesen, da hierdurch ein besonders leichtes Eigengewicht bereitgestellt werden kann. Zudem sind Kunststoffpaletten besonders schnell und effektiv zu reinigen. Besonders vorteilhaft ist die Kunststoffpalette vollständig aus Kunststoff ausgebildet. In einer vorteilhaften Ausführungsform ist die Kunststoffpalette mittels Spritzgussverfahren einteilig hergestellt. Als Material hierfür wird vorteilhaft recyceltes Kunststoffgranulat eingesetzt.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Figur 1: eine Draufsicht einer Mehrwegtransportvorrichtung;
- Figur 2: eine Unteransicht einer Mehrwegtransportvorrichtung aus Figur 1;
- Figur 3: eine perspektivische Schnittansicht einer Mehrwegtransportvorrichtung;
- Figur 4: eine perspektivische Schnittansicht eines Ausschnitts einer Unteransicht aus Figur 2;
- Figur 5: eine schematische Schnittansicht des Drehstapelmechanismus mehrerer Mehrwegtransportvorrichtungen;
- Figur 6: eine weitere schematische Ansicht des Drehstapelmechanismus mehrerer Mehrwegtransportvorrichtungen; und
- Figur 7 a bis c: schematische Anordnungsmöglichkeiten der Mehrwegtransportvorrichtungen in unterschiedlichen Ausrichtungen.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

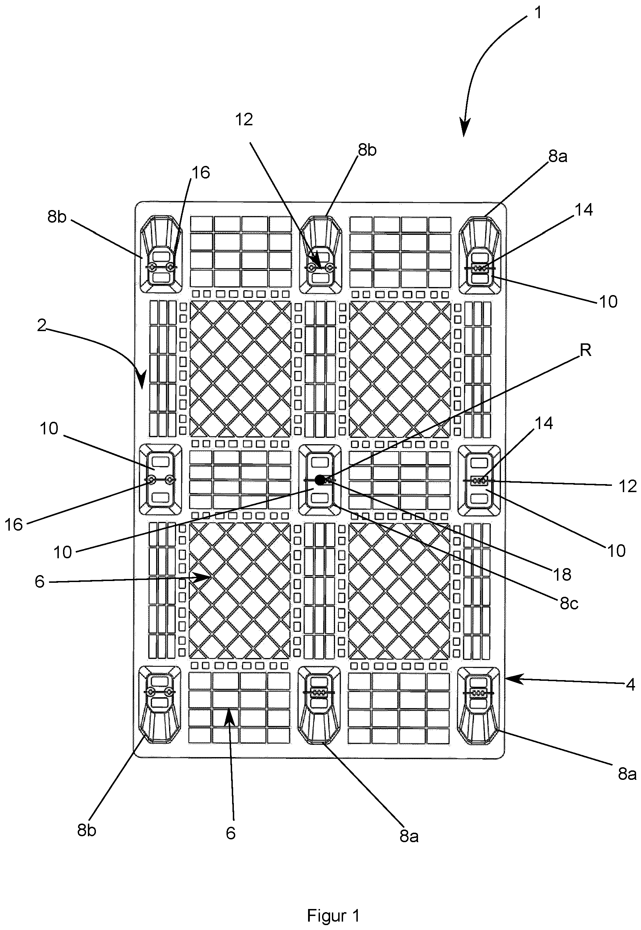

Figur 1 zeigt eine Mehrwegtransportvorrichtung 1 in der Draufsicht. Die hier gezeigte Mehrwegtransportvorrichtung 1 weist einen rechteckigen Umriss auf. Hier ist die Güterträgeroberseite 2 sowie der umlaufenden Rand 4 gezeigt.

Die Güterträgeroberseite 2 ist in diesem Ausführungsbeispiel unterbrochen ausgebildet und weist zahlreiche Verstrebungen 6 auf. Diese können unterschiedlich ausgebildet sein, dienen aber vorteilhaft alle der zusätzlichen Stabilisierung und Gewichtsreduktion.

Weiterhin sind in diesem Ausführungsbeispiel insgesamt neun Standfüße 8a, 8b, 8c gezeigt. Alle gezeigten Standfüße 8 a-c weisen an ihrer Grundfläche 10 und mit dieser verbunden jeweils ein Stabilisierungselement 12 auf. Diese Stabilisierungselemente 12 verbinden zwei einander gegenüberliegende Seitenwandungen des jeweiligen Standfußes. Das Stabilisierungselement 12 kann auch als Kunststoffrippe bezeichnet werden. Mit und/oder an den Stabilisierungselementen 12 sind hier unterschiedliche Drehstapelelemente 14, 16, 18 gezeigt. Auch diese sind fest mit der jeweiligen Grundfläche 10 verbunden.

Die Standfüße 8a weisen in ihrem freien Innenvolumen das erste Drehstapelelement 14 auf. Die Standfüße 8b weisen in ihrem freien Innenvolumen das zweite Drehstapelelement 16 auf. Der Standfuß 8c weist in seinem freien Innenvolumen das dritte Drehstapelelement 18 auf.

In diesem Fall sind, von der geometrischen Ausbildung her, die Drehstapelelemente 14 und 18 als ondulierender Block ausgebildet. Allerdings ist das Drehstapelelement 18 direkt an der Wandung des Standfußes 8c angeordnet und nicht wie die anderen ersten Drehstapelelemente 14 mittig in den Standfüßen 8a auf der Grundfläche 10 positioniert. In diesem Ausführungsbeispiel sind vier Standfüße 8a und vier Standfüße 8b angeordnet. Der Standfuß 8c ist mittig von der flächig ausgebildeten Mehrwegtransportvorrichtung 1 angeordnet. Durch diesen Standfuß 8c verläuft auch die Rotationsachse R, hier als Punkt gezeigt, um den Drehstapelmechanismus auszubilden. Die Rotationsachse R erstreckt sich in vertikaler Richtung bezogen auf die Grundfläche des Standfußes 8c.

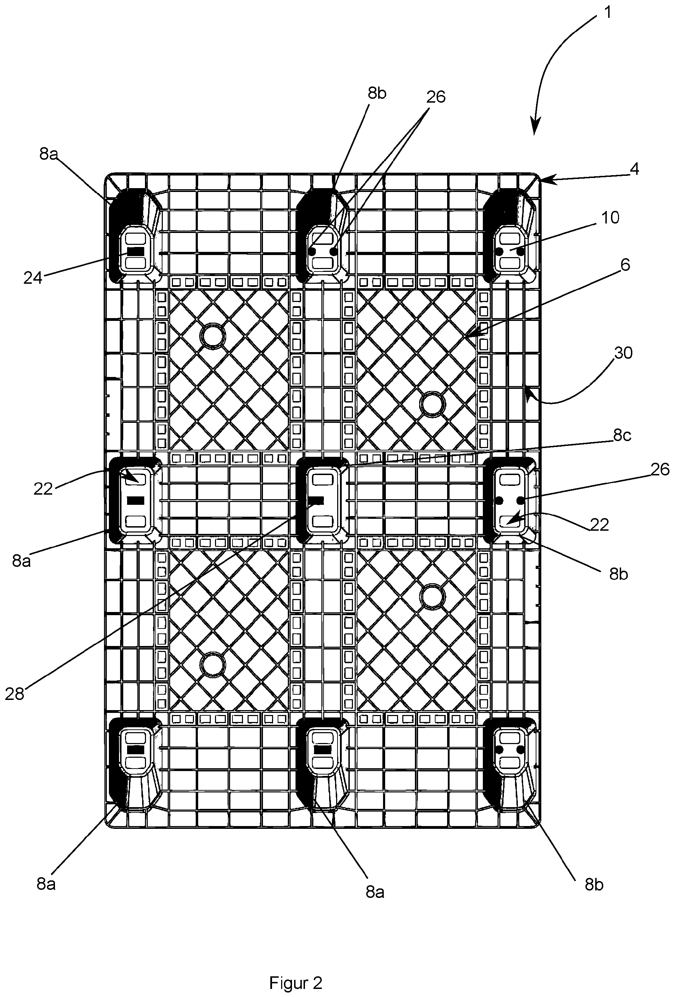

In Figur 2 ist eine Trägerunterseite 30 der Mehrwegtransportvorrichtung 1 aus Figur 1 gezeigt, indem an der Längsseite gespiegelt wurde. Hier wird nun die Außenseite der Grundfläche 10 gezeigt. Die Grundfläche 10 weist in diesem Ausführungsbeispiel jeweils zwei Öffnungen 22 auf. Diese dienen der Wasserabfuhr.

Weiterhin sind an der Außenseite der Grundfläche 10 Drehstapelvertiefungen 24, 26, 28 gezeigt. Die Drehstapelvertiefungen 24 sind komplementär zu den ersten Drehstapelelementen 14, die Drehstapelvertiefungen 26 sind komplementär zu den zweiten Drehstapelelementen 16 und die Drehstapelvertiefung 28 ist komplementär zu dem dritten Drehstapelelement 18 ausgebildet. Die Drehstapelvertiefungen 24, 26, 28 können als Ausnehmung und/oder auch als Durchtrittsöffnung ausgebildet sein.

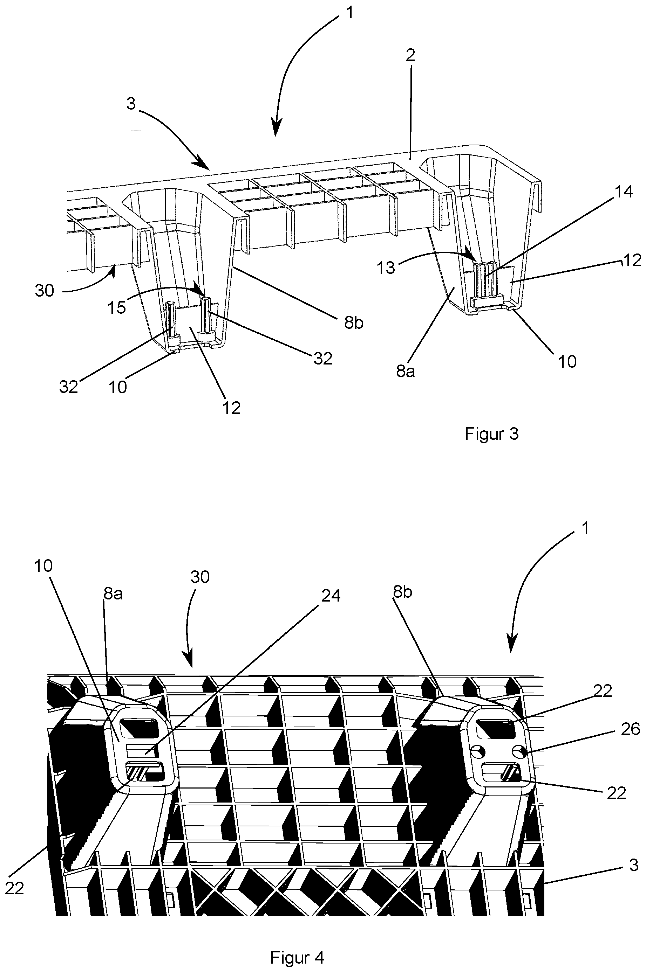

In Figur 3 ist ein Ausschnitt einer Mehrwegtransportvorrichtung 1 in Schnittansicht gezeigt. Zur besseren Veranschaulichung sind hier die beiden Standfüße 8a und 8b im Schnitt gezeigt. Diese Standfüße 8a, 8b sind am Trägerelement 3, an dessen Trägerunterseite 30 angeformt. Zudem sind die hier exemplarisch gezeigten zwei Standfüße 8a, 8b als Hohlkörper ausgebildet, welche sich in Richtung der Güterträgeroberseite 2 aufweiten. Es ist ersichtlich, dass beide Standfüße 8a, 8b als Hohlkörper ausgeformt sind und an der Güterträgeroberseite 2 offen und zugänglich sind.

Weiterhin ist ersichtlich, dass die Standfüße 8a und 8b eine konische Form aufweisen und sich nach unten, in Richtung Grundfläche 10 verjüngen.

Weiterhin weisen auch beide Standfüße 8a, 8b jeweils ein Stabilisierungselement 12 auf. Dieses verbindet zwei gegenüberliegende Wandungen des jeweiligen Standfußes 8a, 8b.

Im Standfuß 8a ist ein erstes Drehstapelelement 14 an der Grundfläche 10 angeordnet. Das Drehstapelelement 14 ist aus dem Stabilisierungselement 12 hervorstehend ausgebildet. Hierdurch ist ein Überstand 13 ausgebildet. Besonders vorteilhaft erfolgt dies dadurch, dass das Drehstapelelement 14 in seiner vertikalen Längserstreckung nach oben hin länger ausgebildet ist, als das Stabilisierungselement 12. In der hier gezeigten Ansicht ist das Drehstapelelement 14 einteilig mit dem Stabilisierungselement 12 ausgebildet.

Im Standfuß 8b ist ein zweites Drehstapelelement 16 an der Grundfläche 10 angeordnet. Das Drehstapelelement 16 eist eine andere geometrische Ausgestaltung als das Drehstapelelement 14 auf. Es ist aus zwei Vorsprüngen 32 ausgebildet. Die beiden Vorsprünge 32 sind zueinander beabstandet angeordnet. Weiterhin sind die beiden Vorsprünge 32 gleich hoch in ihrer vertikalen Erstreckung. Die Vorsprünge 32 sind in ihrer vertikalen Längserstreckung nach oben hin länger ausgebildet, als das Stabilisierungselement 12. Sie stehen folglich aus diesem mit einem Überstand 15 hervor.

Weiterhin ist gezeigt, dass die Drehstapelelemente 14, 16 eine profilierte Oberfläche, hier beispielhaft als Rillen ausgebildet, aufweisen.

In Figur 4 ist nochmals ein perspektivischer Ausschnitt aus Figur 2 gezeigt. Es ist die Trägerunterseite 30 des Trägerelements 3 zu sehen. Hier sind besonders gut die Drehstapelvertiefungen 24 und 26 gezeigt. Diese sind als Ausnehmung ausgebildet und weisen selbst, neben der Einführöffnung für das jeweilige Drehstapelelement, keine weitere Öffnung auf.

Vorteilhaft sind die Drehstapelvertiefungen 24 und 26 so tief ausgebildet, dass der Überstand 13, 15 der hierzu passgenauen Drehstapelelemente 14 und 16 in die Vertiefungen einführbar ist. Vorteilhaft ist somit ein Formschluss ausgebildet. Zugleich ist es weiterhin von Vorteil, wenn die Außenseite der Grundfläche 10 mit oberen Kante des Stabilisierungselements 12 (hier nicht gezeigt) zumindest teilweise eine gemeinsame Kontaktfläche ausbildet.

Im genesteten Zustand bilden folglich Stabilisierungselemente 12 und Drehstapelelemente 14 und 16 zumindest abschnittweise gemeinsame Kontaktflächen mit den Drehstapelvertiefungen 24 und 26 sowie mit der Außenseite der Grundfläche 10 aus. Gleiches gilt auch für die Drehstapelvertiefung 28 und das dritte Drehstapelelemente 18 (hier aber nicht gezeigt).

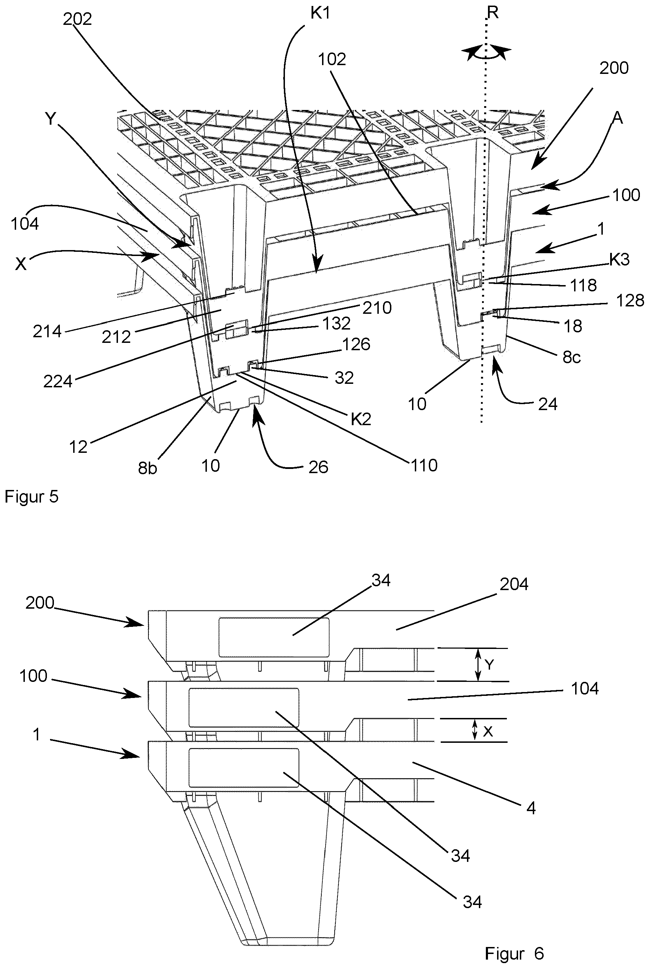

Figur 5 zeigt eine Schnittansicht von drei Mehrwegtransportvorrichtungen 1, 100, 200. Die hier gezeigten Mehrwegtransportvorrichtungen 1, 100 und 200 sind in ihrer Ausgestaltung gleich ausgebildet. Allerdings unterscheiden sie sich in ihrer Anordnungsposition.

Die Mehrwegtransportvorrichtung 1 ist mit der Mehrwegtransportvorrichtung 100 im genesteten Zustand gezeigt. Beide Mehrwegtransportvorrichtungen sind zueinander deckungsgleich.

Die Drehstapelelemente 16 bilden jeweils einen Formschluss mit den Drehstapelvertiefungen 126 der darüber positionierten Mehrwegtransportvorrichtung 100 aus. Das Drehstapelelement 18 bildet einen Formschluss mit den Drehstapelvertiefungen 128 der darüber positionierten Mehrwegtransportvorrichtung 100 aus. Vorteilhaft sind die Drehstapelvertiefungen 126, 128 genau so tief ausgebildet, wie der Überstand 13 des aus dem jeweiligen Stabilisierungselement 12 hervorstehenden Drehstapelelements 32, 28 ausgebildet ist. Somit kann ein effektiver Formschluss erreicht werden. Besonders vorteilhaft wird zwischen der Außenseite der Grundfläche 110 und dem darunter angeordneten Stabilisierungselement 12 zumindest abschnittsweise eine gemeinsame Kontaktfläche K2 ausgebildet. Besonders von Vorteil ist, wenn die Drehstapelvertiefungen 128, 132 mit den darin im Formschluss angeordneten Drehstapelelementen 28, 32 zumindest abschnittsweise eine gemeinsame Kontaktfläche ausbilden. Weiterhin besonders vorteilhaft zur Kraftableitung ist diese gemeinsame Kontaktfläche horizontal ausgerichtet.

In diesem genesteten Zustand bilden auch die Trägerunterseite 30 der Mehrwegtransportvorrichtung 100 und die Güterträgeroberseite 2 der Mehrwegtransportvorrichtung 1 wenigstens eine gemeinsame Kontaktfläche K1 aus. Vorteilhaft liegen sie aneinander an. Folglich wird eine besonders platzsparende und volumensparende Nesting-Positionierung mehrerer Mehrwegtransportvorrichtungen übereinander ermöglicht.

Weiterhin ist eine dritte Mehrwegtransportvorrichtung 200 gezeigt. Diese ist vorteilhaft um 180° rotiert gegenüber einer vertikalen Rotationsachse R. Diese Rotationsachse verläuft durch den Mittelpunkt der Grundfläche 10 des Standfußes 8c.

Dies bedeutet, dass die beiden Mehrwegtransportvorrichtungen 100, 200 nicht mehr deckungsgleich zueinander sind, sondern dass die Drehstapelvertiefungen nicht mehr zu den darunter angeordneten Drehstapelelementen 132, 118 passen. Dies bedeutet, dass die Außenseite der Grundfläche 210 der oberen Mehrwegtransportvorrichtung 200 direkt auf den darunter angeordneten Drehstapelelementen 132 und 118 aufliegt. Es ist eine Kontaktfläche K3 ausgebildet. Es wird kein Formschluss zwischen Drehstapelelementen und Drehstapelvertiefungen ausgebildet, sondern eine Beabstandung A.

Die Drehstapelelemente 132, 118 können nicht in die darüber versetzt angeordneten Drehstapelvertiefungen 224, 228 der oberen Mehrwegtransportvorrichtung 200 eingeführt werden. Diese Beabstandung A ist ausreichend, dass seitlich (hier nicht gezeigt) ein Transporthilfsmittel, beispielsweise ein Gabelstapler, die obere Mehrwegtransportvorrichtung 200 untergreifen und anheben kann. Selbstverständlich ist dies nicht begrenzend zu verstehen, so dass es auch denkbar ist, dass eine reine manuelle Anhebung durch den entstehenden Spalt durch Personal vereinfacht wird.

Vorteilhaft ist die Beabstandung A dem Überstand entsprechend, mit welchem die einzelnen Drehstapelelemente 14, 16, 18 aus dem jeweiligen Stabilisierungselement 12 hervorstehen. Es ist zudem gezeigt, dass die beiden gestapelten Mehrwegtransportvorrichtungen 100 und 200 über die Beabstandung A voneinander beabstandet angeordnet sind und die Trägerelemente 103, 203 keine gemeinsame Kontaktfläche mehr aufweisen.

Aus seitlich, sichtbarer Perspektive werden die Abstände X und Y bedingt. So ist gezeigt, dass trotz Nesting-Anordnung noch ein Untergreifen des Randes 104 mit Abstand X möglich ist.

In Figur 6 ist ein weiteres Ausführungsbeispiel gezeigt, welches den Drehstapelmechanismus nochmals veranschaulicht. Die unterste Mehrwegtransportvorrichtung 1 ist mit der Mehrwegtransportvorrichtung 100 im genesteten Zustand gezeigt. Hier ergibt sich ein Abstand X zwischen den beiden umlaufenden Rändern 4 und 104. Hierdurch kann noch immer ein manuelles Anheben durch Personal ermöglicht sein.

Im gestapelten Zustand hingegen, welcher bei der Positionierung der Mehrwegtransportvorrichtung 100 und Mehrwegtransportvorrichtung 200 gezeigt ist, ist der Abstand Y deutlich größer als der Abstand X. Besonders vorteilhaft ist der Abstand X um wenigstens ¼ des Abstandes Y kleiner als der Abstand Y.

Weiterhin weist jede Mehrwegtransportvorrichtung 1, 100, 200 jeweils ein Markierungsmittel 34 auf. Dieses kann aufgedruckt oder auch aufgeklebt sein. Das Markierungsmittel 34 dient dazu, Personal oder auch Roboter zu vermitteln, ob zwei übereinander angeordnete Mehrwegtransportvorrichtungen genestet oder gestapelt sind. Im genesteten Zustand zweier Mehrwegtransportvorrichtungen sind die Markierungsmittel 34 in Flucht übereinander angeordnet. Dies ist zwischen den Mehrwegtransportvorrichtungen 1 und 100 gezeigt. Sind zwei Mehrwegtransportvorrichtungen hingegen gestapelt, so sind die Markierungsmittel 34 übereinander versetzt positioniert. Dies ist zwischen den Mehrwegtransportvorrichtungen 100 und 200 gezeigt.

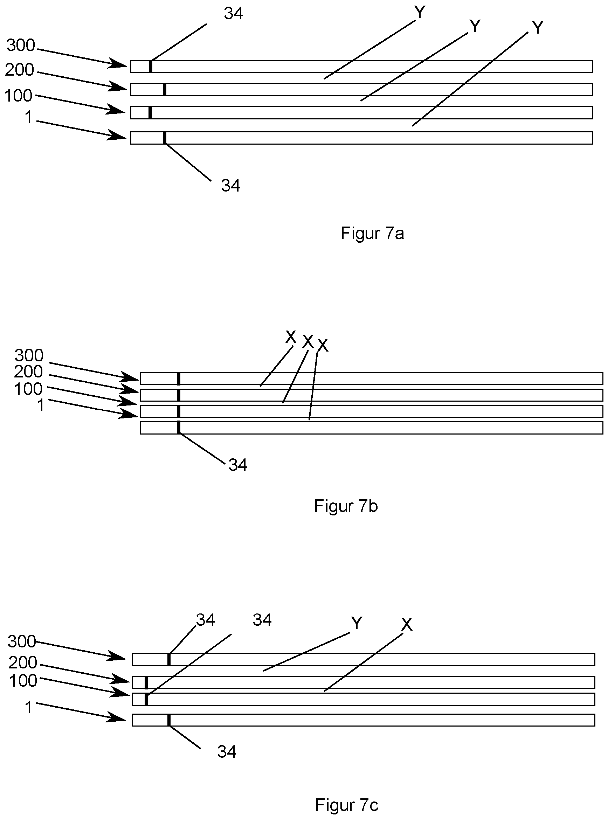

Schließlich zeigen Figuren 7 a bis c weitere Anordnungsmöglichkeiten von Mehrwegtransportvorrichtungen 1 im gestapelten und/oder genesteten Zustand sowie deren entsprechende Beabstandung X, Y zueinander. Es ist ersichtlich, dass je nach Zustand die Markierungshilfen 34 in Flucht (Nestinganordnung) und versetzt zueinander (Stapelanordnung) angeordnet sind.

Obwohl die Erfindung im Detail durch die vorteilhaften Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombinationen aus den offenbarten Merkmalen gebildet werden.

### Bezugszeichenliste

- 1: Mehrwegtransportvorrichtung
- 100: Mehrwegtransportvorrichtung
- 200: Mehrwegtransportvorrichtung
- 300: Mehrwegtransportvorrichtung

- 2, 102, 202: Güterträgeroberseite
- 3, 103, 203: Trägerelement
- 4, 104, 204: umlaufender Rand
- 6: Verstrebungen
- 8a,b,c: Standfüße
- 10, 110, 210: Grundfläche
- 12, 112, 212: Stabilisierungselement
- 13, 113, 213: Überstand
- 14, 114, 21: erstes Drehstapelelement
- 15, 115, 215: Überstand
- 16, 116, 216: zweites Drehstapelelement
- 18, 118, 218: drittes Drehstapelelement
- 22, 122, 222: Öffnung
- 24, 124, 224: erste Drehstapelvertiefung
- 26, 126, 226: zweite Drehstapelvertiefung
- 28, 128, 228: dritte Drehstapelvertiefung
- 30, 130, 230: Trägerunterseite
- 32, 132, 232: Vorsprung
- 34: Markierungsmittel
- X: Abstand
- Y: Abstand
- R: Rotationsachse
- A: Beabstandung
- K1: Kontaktfläche
- K2: Kontaktfläche
- K3: Kontaktfläche

## Patentansprüche

1. Mehrwegtransportvorrichtung (1; 100; 200) aus Kunststoff zum Transportieren von Gütern, wenigstens aufweisend
a. ein flächig ausgebildetes Trägerelement (3; 103; 203), welches eine Güterträgeroberseite (2; 102; 202) und eine hiervon abgewandte Trägerunterseite (30; 130; 230) aufweist, wobei Güterträgeroberseite (2) und Trägerunterseite (30; 130; 230) über wenigstens einen umlaufenden Rand (4; 104; 204) miteinander verbunden sind,
b. mehrere, an der Trägerunterseite (30; 130; 230) und/oder Güterträgeroberseite (2; 102; 202) und/oder dem Trägerelement (3; 103; 203) angeformte Standfüße (8a; 8b; 8c), welche als zur Güterträgeroberseite (2; 102; 202) hin offene Hohlkörper ausgebildet sind, und deren Grundfläche (10; 110; 210) zumindest teilweise geschlossen ausgebildet sind,
c. wobei innerhalb von wenigstens zwei Standfüßen (8a; 8b; 8c) jeweils wenigstens ein Drehstapelelement (14; 16; 18) angeordnet ist.

2. Mehrwegtransportvorrichtung (1; 100; 200) aus Kunststoff nach Anspruch 1,
**dadurch gekennzeichnet, dass**
das wenigstens eine Drehstapelelement (14; 16; 18) mit der zumindest teilweise geschlossenen Grundfläche (10;
110; 210) des Standfußes (8a; 8b; 8c) verbunden ist.

3. Mehrwegtransportvorrichtung (1; 100; 200) aus Kunststoff nach Anspruch 1 oder 2,
**dadurch gekennzeichnet, dass**
die wenigstens zwei Drehstapelelemente (14; 16; 18) zueinander verschiedene geometrische Ausgestaltungen aufweisen.

4. Mehrwegtransportvorrichtung (1; 100; 200) aus Kunststoff nach Anspruch 3,
**dadurch gekennzeichnet, dass**
ein erstes Drehstapelelement (14; 114; 214) als aus einem Stabilisierungselement (12; 112; 212) zumindest teilweise hervorstehender Block ausgebildet ist.

5. Mehrwegtransportvorrichtung (1; 100; 200) aus Kunststoff nach Anspruch 3,
**dadurch gekennzeichnet, dass**
ein zweites Drehstapelelement (16; 116; 216) wenigstens zwei Vorsprünge (32; 132; 232) aufweist.

6. Mehrwegtransportvorrichtung (1; 100; 200) aus Kunststoff nach Anspruch 5,
**dadurch gekennzeichnet, dass**
die beiden Vorsprünge (32; 132; 232) aus einem Stabilisierungselement (12; 112; 212) zumindest teilweise hervorstehend ausgebildet sind.

7. Mehrwegtransportvorrichtung (1; 100; 200) aus Kunststoff nach Anspruch 5 oder 6,
**dadurch gekennzeichnet, dass**
das Stabilisierungselement (12; 112; 212) zwei einander gegenüberliegende Innenwandungen des Standfußes (8a; 8b; 8c) miteinander verbindet.

8. Mehrwegtransportvorrichtung (1; 100; 200) aus Kunststoff nach Anspruch 1,
**dadurch gekennzeichnet, dass**
an einer Außenseite der Grundfläche (10; 110; 210) Drehstapelvertiefungen (24; 26; 28) und/oder Öffnungen (22) ausgebildet sind.

9. Mehrwegtransportvorrichtung (1; 100; 200) aus Kunststoff nach Anspruch 8,
**dadurch gekennzeichnet, dass**
die Drehstapelvertiefungen(24; 26; 28) komplementär zu den Drehstapelelementen (14; 16; 18) ausgebildet sind.

10. Mehrwegtransportvorrichtung (1; 100; 200) aus Kunststoff nach Anspruch 1,
**dadurch gekennzeichnet, dass**
diese eine Kunststoffpallette ist.
